# EUROPÄISCHE PATENTSCHRIFT

(11) **EP 2 363 223 B1**
(45) Veröffentlichungstag und Bekanntmachung des Hinweises auf die Patenterteilung: **15.05.2013**
(21) Anmeldenummer: 10155188.5
(22) Anmeldetag: 02.03.2010
(51) Int. Cl.: B23B 31/16, B23B 31/28, B23Q 17/00

(54) **Spanneinrichtung für Werkzeugmaschinen**
Clamping device for machine tools
Dispositif de serrage pour machines-outils

(43) Veröffentlichungstag der Anmeldung: 07.09.2011
(73) Patentinhaber: Hiestand, Karl, 88630 Pfullendorf (DE)
(72) Erfinder: Hiestand, Karl, 88630 Pfullendorf (DE)
(74) Vertreter: Engelhardt & Engelhardt

(56) Entgegenhaltungen:
- EP-A1- 0 436 769
- EP-A1- 1 637 260
- EP-A1- 1 728 574
- EP-A1- 2 103 368
- EP-A2- 0 314 945
- EP-A2- 0 403 693
- EP-A2- 1 114 685
- DE-A1- 3 218 084
- DE-A1- 3 709 246
- DE-A1-102007 042 432
- JP-A- 11 320 222
- JP-A- 2002 192 410

## Beschreibung

Die Erfindung bezieht sich auf eine Spanneinrichtung für Werkzeugmaschinen, die mit einem Kraft-Spannfutter zur Halterung eines Werkstückes) versehen und dessen Spannbacken mittels der Spanneinrichtung über eine axial verstellbare Zugstange betätigbar sind, wobei die Spanneinrichtung ein Maschinengehäuse, mindestens einen Teil der Zugstange, einen umschaltbaren elektrischen Servomotor sowie einen Bewegungswandler aufweist, mittels dem die Verstellbewegungen der Rotorwelle des Servomotors in die zur Verstellung der Spannbacken erforderlichen axialen Verstellbewegungen der Zugstange umsetzbar sind, wobei der Stator des Servomotors ortsfest, vorzugsweise am Maschinenbett der Werkzeugmaschine, abgestützt ist, wobei der Rotor des Servomotors über ein zweistufiges Getriebe, dessen beide Stufen unmittelbar miteinander gekoppelt sind, und den z.B. als Gewinderollspindel ausgebildete Bewegungswandler mit dem Teil der Zugstange trieblich verbunden ist, und wobei die Maschinenspindel der Werkzeugmaschine mit den beiden Stufen des Getriebes in Triebverbindung stehen kann.

Durch die EP 0 403 693 A2 ist desweiteren eine Vorrichtung zum Erzeugen eines Steildrehmomentes für ein Bewegungswandlungssystem, insbesondere zum Verstellen der Backen eines Futters, dieser Art bekannt, das ein zweistufiges Getriebe aufweist. Die Übersetzungen der beiden Getriebestufen sind hierbei aber gleichgroß gewählt, so dass bei jeweils gleichen Drehzahlen lediglich entgegengesetzte Drehrichtungen erzielbar sind. Eine Energieeinsparung ist bei Anwendung dieser bekannten Vorrichtung somit nicht gegeben.

Außerdem ist durch die EP 0234230 B1 eine Spanneinrichtung bekannt, bei der die Rotationsbewegungen des Rotors mittels eines Schraubtriebes als Bewegungswandler in axiale Verstellbewegungen umgewandelt werden.Der Stator des Servomotors wird hierbei während eines Bearbeitungsvorganges von der Maschinenspindel der Werkzeugmaschine mit deren Drehzahl ständig angetrieben, und mit dieser läuft synchron der Rotor um. Die Wicklung des Servomotors wird dadurch in einem starken Maße belastet. Vor allem aber ist hierbei von Nachteil, dass bei einem Spannvorgang die erheblichen Massen der an der Kraftübertragung beteiligten Bauteile jeweils beschleunigt bzw. abgebremst werden müssen, somit hohe Zentrifugalkräfte auftreten und insbesondere die zur Kraftübertragung vorgesehen Riementriebe sehr stark belastet sind. Eine lange Lebensdauer dieser bekannten Spanneinrichtung ist demnach nicht gewährleistet, auch verursachen die ständig umlaufenden Bauteile, insbesondere die Riementriebe, sehr hohe Betriebsgeräusche.

Des Weiteren ist von Nachteil, dass der Energieverbrauch, da der Servomotor ständig eingeschaltet ist, erheblich ist und dass die Energiezufuhr über Schleifkontakte, die einem hohen Verschleiß unterliegen, erfolgen muss. Eine zufriedenstellende Betriebesweise ist somit bei dieser Spanneinrichtung, die außerdem groß und ausladend baut, nicht zu bewerkstelligen.

Aufgabe der Erfindung ist es daher, eine Spanneinrichtung für Werkzeugmaschinen der vorgenannten Gattung zu schaffen, die nicht nur kompakt zu gestalten ist, sondern die vor allem bei Arbeitsvorgängen einen geringen Energieaufwand erfordert und somit wirtschaftlich einsetzbar ist. Der Rotor des Servomotors soll nämlich ausschließlich beim Einspannen und beim Lösen eines Werkstückes durch den Stator angetrieben werden. Bei der Bearbeitung eines eingespannten Werkstückes soll dagegen der Rotor stillgesetzt sein, und durch diesen soll lediglich die Spannkraft aufrechterhalten werden, so dass die Stromaufnahme des Servomotors beim Bearbeiten eines Werkstückes gering ist. Des Weiteren sollen, da bei Arbeitsvorgängen nur wenige Bauteile der Spanneinrichtung mit umlaufen, die Betriebsgeräusche gering gehalten werden. Eine lange störungsfreie Lebensdauer bei stets hoher Betriebssicherheit soll somit gegeben sein.

Gemäß der Erfindung wird dies bei einer Spanneinrichtung für Werkzeugmaschinen der vorgenannten Art dadurch erreicht, dass das Maschinengehäuse mit der Maschinenspindel verbindbar ist, dass das Maschinengehäuse mit den beiden Stufen des Getriebes in Triebverbindung steht, dass die Übersetzungen der beiden Stufen des Getriebes reziprok zueinander ausgelegt und jeweils durch einen Zahnradsatz mit gleichen Zähnezahlen und einem Zahnradsatz mit unterschiedlichen und reziprok zu dem anderen Zahnradsatz bemessenen Zahnrädern gebildet sind, derart, dass die Drehbewegungen des mit der Maschinenspindel verbindbaren Maschinengehäuses in der an den Servomotor angeschlossenen ersten Stufe des Getriebes unwirksam sind.

Angebracht ist es hierbei, die mit den zentrisch angeordneten Zahnrädern kämmenden Zahnräder jeweils in Gehäusen drehbar zu lagern, von denen die dem Servomotor unmittelbar benachbarte erste Stufe in einem mit dessen Rotorwelle verbundenen antreibbaren umlaufenden Gehäuse und die zweite Stufe des Getriebes in einem ortsfesten, vorzugsweise am Maschinenbett abgestützten, Gehäuse drehbar zu lagern sind.

Zweckmäßig ist es des Weiteren, die reziprok zueinander ausgelegten Zahnradsätze der beiden Stufen des Getriebes unmittelbar nebeneinander und deren Radsätze mit gleichen Zähnezahlen jeweils auf den Außenseiten der beiden Stufen anzuordnen, die der Reziprozität zugeordneten Radsätze der beiden Stufen über eine Hohlwelle, an der Zahnräder mit gleichen Zähnezahlen angearbeitet bzw. angebracht sind, trieblich miteinander zu verbinden und zur Nutzung der Reziprozität wechselweise das eine der Zahnräder der Hohlwelle als Antriebsglied und das andere Zahnrad als Abtriebsrad wirken zu lassen.

Außerdem sollten die Gehäuse der ersten und zweiten Stufe des Getriebes auf einem zentrischen wellenförmigen Ansatz des mit der Maschinenspindel der Werkzeugmaschine drehfest verbindbaren Maschinengehäuse drehbar abgestützt sein, wobei auch das mit gleichen Zähnezahlen ausgelegten Zahnradpaar der ersten Stufe des Getriebes über den wellenförmigen Ansatz mit dem Maschinengehäuse der Werkzeugmaschine trieblich fest verbunden sein sollte.

Angebracht ist es ferner, um Montagetolleranzen ausgleichen zu können, die Rotorwelle des Servomotors über eine elastische Kupplung mit dem Gehäuse der ersten Stufe des Getriebes trieblich zu koppeln.

Nach einer Weiterbildung ist vorgesehen, zwischen der zweiten Stufe des Getriebes ein, vorzugsweise durch Zahnräder gebildetes als Untersetzungsgetriebe ausgelegtes Umlaufrädergetriebe anzuordnen, dessen umlaufende Zahnräder in einem mit der Maschinenspindel verbindbaren Maschinengehäuse drehbar zu lagern sind.

Die antreibbare Glocke des Bewegungswandlers sollte, um eine Nachspannung zu gewährleisten, axial elastisch verstellbar in dem mit der Maschinenspindel verbundenen Maschinengehäuse abgestützt sein, in dem dieses mittels Federn, vorzugsweise Tellerfe dern, Gummipuffern oder dergleichen über Wälzlager an dem Gehäuse axial elastisch verstellbar abgestützt ist.

Zur Überwachung des jeweiligen Betriebszustandes kann der Zugstange eine Wegmesseinrichtung und/oder mit dieser zusammen wirkende Endschalter zugeordnet werden.

Außerdem kann zur Erhöhung der Betriebssicherheit dem Servomotor der Spanneinrichtung und/oder dem durch dessen Rotor antreibbaren Gehäuse der ersten Stufe des Getriebes eines Sicherheitseinrichtung zugeordnet werden, mittels der der mit dem Rotor zusammenwirkende Antriebsstrang blockierbar ist.

Die Sicherheitseinrichtung kann hierbei aus einer z.B. in einem gesonderten Gehäuse eingesetzten Magnetspule, einem Anker oder einem durch ein Druckmittel, vorzugsweise durch Druckluft, beaufschlagbaren Verstellkolben und einem entgegen der Kraft einer Feder axial verstellbaren an dem Anker bzw. dem Verstell-Kolben angebrachten Sicherungsbolzen bestehen, der unmittelbar oder über Zwischenglieder in an zugeordneten Bauteilen vorgesehene Ausnehmungen einführbar ist. Auch kann die Sicherungseinrichtung als Reibkupplung ausgebildet sein, deren mit einem vorzugsweise an dem Gehäuse der ersten Stufe des Getriebes angebrachten Reibbelag über einen weiteren Reibbelag zusammenwirkender Verstellkolben mittels Magnetkraft oder durch ein Druckmittel betätigbar ist.

Vorteilhaft ist es ferner, den Servomotor koaxial zur Maschinenspindel an dem Gehäuse der ersten Stufe des Getriebes anzubringen, es ist aber auch möglich, den Servomotor achsparallel oder winkelig zur Maschinenspindel anzuordnen und dessen Rotor über Getriebeglieder, vorzugsweise eine Zahnradstufe bzw. Kegelräder, mit dem Gehäuse der ersten Stufe des Getriebes trieblich zu verbinden.

Wird eine Spanneinrichtung für Werkzeugmaschinen gemäß der Erfindung ausgebildet, so ist stets die Gewähr gegeben, dass ein zu bearbeitendes Werkstück in kurzer Zeit in einem Kraftspannfutter einzuspannen ist und dass die vorgegebene Spannkraft während eines Arbeitsvorganges gehalten oder an die jeweiligen Verhältnisse ohne Schwierigkeiten angepasst werden kann. Dabei ist von besonderem Vorteil, dass zum Einspannen und Entspannen des Werkstückes lediglich der Rotor des Servomotors und die mit diesem verbundene Bauteile der Spanneinrichtung kurzzeitig anzutreiben sind. Zur Aufrechterhaltung der auf das Werkstück über die Spannbacken einwirkende Kraft muss in dem Servomotor dazu lediglich ein Stillstands-Drehmoment, das in Abhängigkeit von dem jeweiligen Werkstück und/oder der Bearbeitung zu wählen ist und eingestellt werden kann, anstehen. Somit laufen bei einem Arbeitsvorgang nur wenige Bauteile der Spanneinrichtung um, so dass die Betriebsgeräusche niedrig gehalten werden. Vor allem aber ist der Energieverbrauch des Servomotors während der Bearbeitung eines Werkstückes zur Aufrechterhaltung der Spannkraft, zumal dieser auch abgeschaltet und die Spanneinrichtung mittels der Sicherheitseinrichtung blockiert werden kann, gegenüber bekannter Einrichtungen äußerst gering, die Betriebskosten können somit in einem erheblichen Maße gesenkt werden.

Des Weiteren ist eine kompakte Bauweise der vorschlagsgemäß ausgebildeten Spanneinrichtung, die als Vollspanner oder auch als Hohlspanner gestaltet und somit vielseitig einsetzbar ist, gegeben. Auch sind die Bauteile der Spanneinrichtung problemlos und wirtschaftlich herzustellen, eine hohe Funktionsfähigkeit über einen langen Zeitraum ist somit bei wirtschaftlichem Einsatz gegeben. Als dem Servomotor zugeordnete Getriebe können verständlicherweise auch andersartige Getriebekonstruktionen, wie z.B. Spannungswellengetriebe, gewählt werden.

In der Zeichnung sind zwei Ausführungsbeispiele der gemäß der Erfindung ausgebildeten Spanneinrichtung für Werkzeugmaschinen dargestellt, die nachfolgend im Einzelnen erläutert sind. Hierbei zeigen, jeweils in einem Axialschnitt:
- Figur 1: die Spanneinrichtung in vereinfachter Darstellung,
- Figur 2: die Spanneinrichtung nach Fig. 1, eingebaut in eine Werkzeugmaschine und mit Zusatzaggregaten,
- Figur 3: die Spanneinrichtung nach Fig. 2 mit eingezeichnetem Kraftflussverlauf bei einem Spannvorgang,
- Figur 4: die Spanneinrichtung nach Fig. 2 mit eingezeichnetem Kraftflussverlauf während eines Arbeitsvorganges,
- Figur 5: die Spanneinrichtung nach Fig. 2 mit seitlich versetzt angeordnetem Servomotor und
- Figur 6: eine Abwandlung der Spanneinrichtung nach Fig. 5 mit winkelig angeordnetem Servomotor und unmittelbarer Triebverbindung des Getriebes mit dem Bewegungswandler.

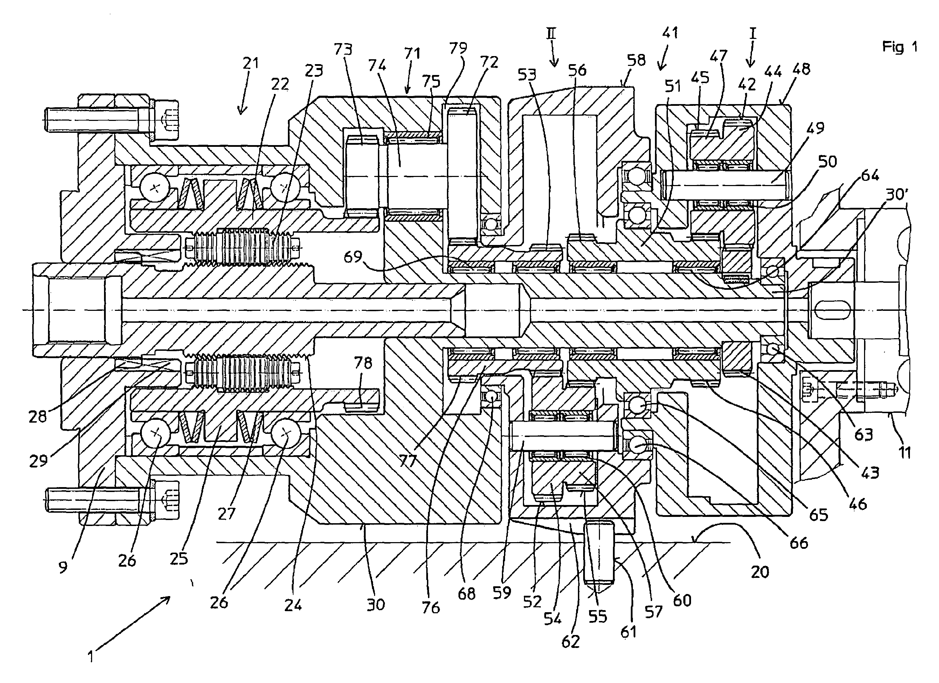

Die in den Figuren 1 bis 6 dargestellt und jeweils mit 1 bezeichnete Spanneinrichtung dient zur Betätigung eines auf einer Werkzeugmaschine 2 angeordneten Kraftspannfutters 3, mittels dessen radial verstellbarer Spannbacken 4 ein zu bearbeitendes Werkstück 10 in dem Kraftspannfutter 3 einspannbar ist. Die Spannbacken 4 des Kraftspannfutters 2 sind hierbei über Umlenkhebel 7 durch eine axial verstellbare zweiteilige Zugstange 6, 6' betätigbar, die mit einem umschaltbaren elektrischen Servomotor 11 über einen Bewegungswandler 21 in Triebverbindung steht. Mittels des Bewegungswandlers 21 werden rotorische Verstellbewegungen des Servomotors 11 in axiale Verstellungsbewegungen der Zugstange 6, 6' umgesetzt.

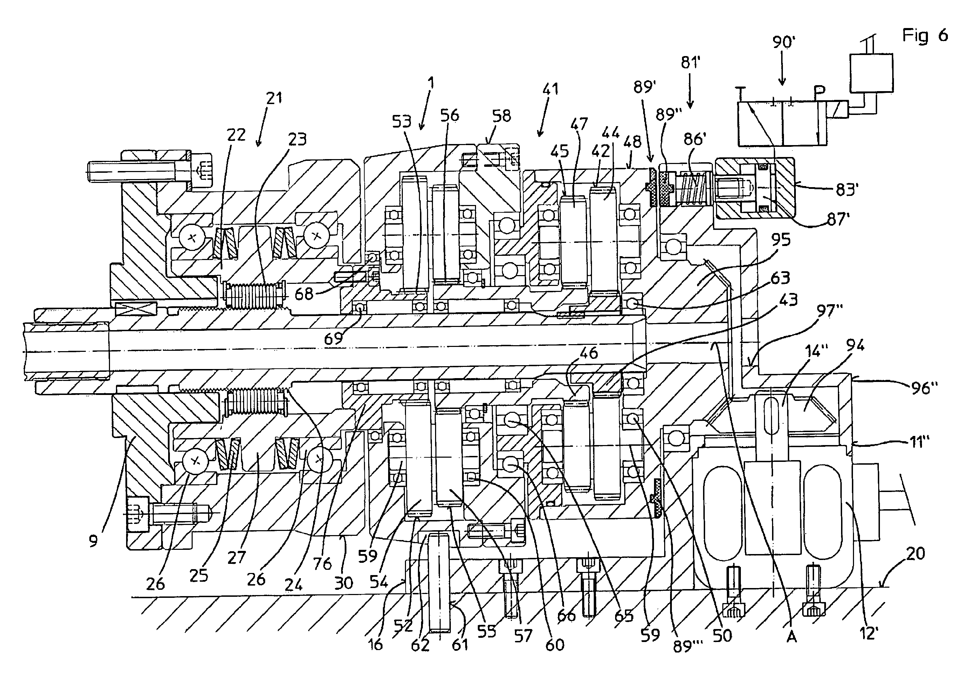

Der Servomotor 11 besteht aus einem Stator 12 und einem Rotor 13, dessen Rotorwelle 14 zum Ausgleich von Montageungenauigkeiten über eine elastische Kupplung 19 mit einem Getriebe 41 trieblich verbunden ist, das gemäß Figur 6 unmittelbar oder, wie dies den Figuren 1 bis 5 zu entnehmen ist, über ein Umlaufrädergetriebe 71 mit dem Bewegungswandler 21 gekoppelt ist. Der Bewegungswandler 21 ist hierbei in einem Maschinengehäuse 30 eingebaut, das über einen Flansch 9 mit der Maschinenspindel 5, auf der ein Elektromotor 8 zum Antrieb der Werkzeugmaschine 2 angeordnet ist, fest verbunden ist. Mit Hilfe eines Lagerbockes 16, der durch Schrauben 18 an einem Maschinenbett 20 der Werkzeugmaschine so befestigt und an dem der Stator 12 des Servomotors 11 mittels Schrauben 17 angebracht ist, ist somit der Sator 12 ortsfest abgestützt.

Der Bewegungswandler 21 weist, wie dies insbesondere der Fig. 1 zu entnehmen ist, eine antreibbare Glocke 22 und ein mit dieser zusammenwirkendes Getriebeglied 23 in Form einer Gewinderollspindel auf, das in ein an der zweiteiligen, miteinander verschraubten Zugstange 6, 6' eingearbeitetes Gewinde 24 eingreift. Sobald die Glocke 22, die trieblich mit der Rotorwelle 14 verbunden ist, in Rotation versetzt wird, werden deren Drehbewegungen durch das Getriebeglied 23 in axiale Verstellbewegungen der Zugstange 6, 6,', da diese mittels eines in eine in den drehfest gehaltenen Flansch 9 eingearbeiteten Nut 29 eingreifenden Ansatz 28 drehfest abgestützt ist, umgewandelt.

Außerdem ist die Glocke 22 in axialer Richtung, um bei einem Spannvorgang nach Stillsetzen des Rotors 13 eine Nachspannung zu ermöglichen, elastisch verstellbar gehalten. Dazu dienen Tellerfedern 27, die zwischen einem von der Glocke 22 radial abstehenden Ansatz 25 und Lager 26 eingesetzt sind. Über die Lager 26 ist die Glocke 22 auch verdrehbar in dem Maschinengehäuse 30 gelagert.

Das mit dem Rotor 13 trieblich verbundene Getriebe 41 ist als zweistufiges Umlaufrädergetriebe ausgebildet, dessen Stufen I und II reziprok zueinander ausgelegt sind. Die beiden Stufen I und II bestehen jeweils aus einem Radsatz 42 und 52, deren Zahnräder 43 und 44 bzw. 53 und 54 die gleichen Zähnezahlen aufweisen, und einen Zahnradsatz 45 und 55, deren Zahnräder 46 und 47 bzw. 56 und 57 reziprok zueinander ausgelegt sind. Die Radsätze 42 und 45 sowie 52 und 55 sind jeweils in gesonderten Gehäusen 48 bzw. 58 angeordnet, von denen das mit dem Servomotor 11 verbundene Gehäuse 48 umlaufen kann, das Gehäuse 58 aber durch einen in eine Nut 62 eingreifenden in den in das Maschinenbett 20 eingesetzten Stift 61 arretiert ist. Die Zahnräder 44 und 47 bzw. 54 und 57 können hierbei jeweils einzeln oder mehrfach, je nach den zu übertragenden Drehmomenten, vorgesehen werden.

Die Zahnräder 44 und 47 der Stufe I sind fest miteinander verbunden und mittels Wälzlager 50 auf einer Achse 49 drehbar in dem Gehäuse 48 gelagert, in gleicher Weise sind die Zahnräder 54 und 57 der Stufe II mittels einer Achse 59 und Wälzlager 60 in dem Gehäuse 58 angeordnet. Über eine Hohlwelle 51, in die die Zahnräder 46 und 56 eingearbeitet sind und die in die Zahnräder 47 des Radsatzes 45 und die Zahnräder 57 des Radsatzes 55 eingreifen, sind die beiden Stufen I und II des Getriebes 41 miteinander gekoppelt. Mit Hilfe von Wälzlagern 63, 64, 65, 66 bzw. 68 sind das Gehäuse 48 und die Hohlwelle 51 auf einem wellenförmigen Ansatz 30' des Maschinengehäuses 30, das Gehäuse 48 außerdem drehbar auf der Hohlwelle 51 und das Gehäuse 58 auf dem Gehäuse 48 und in dem mit der Maschinenspindel 5 verbundenen Maschinengehäuse 30 drehbar gelagert.

Das bei der Ausgestaltung nach den Fig. 1 bis 5, dem Getriebe 41 nachgeschaltete, als Untersetzungsgetriebe ausgebildete, Umlaufrädergetriebe 71 besteht aus einem an einer Hohlwelle 76, die mittels Wälzlager 69 auf dem Ansatz 30' drehbar gehalten ist, angearbeiteten Zahnrad 77, an der auch das Zahnrad 53 des Radsatzes 52 angebracht ist, und aus den durch eine Welle 74 verbundenen Zahnrädern 72 und 73, von denen das Zahnrad 72 in das Zahnrad 77 und das Zahnrad 73 in ein an der Glocke 22 angebrachtes Zahnrad 78, eingreifen. Die Welle 74 ist mit Hilfe eines Wälzlagers 75 drehbar in einer angepassten Ausnehmung 79 des Maschinengehäuses 30 gelagert, das wiederum mittels des Lagers 68 auf dem Gehäuse 58 drehbar abgestützt ist.

Um das Werkstück 10 in dem Kraftspannfutter 3 einzuspannen, ist dem Servomotor 11 über eine Stromleitung 15 und ein Steuergerät 40 elektrische Energie gesteuert zuzuführen. Dadurch werden der Rotor 13 und das mit dessen Rotorwelle 14 und die elastische Kupplung 19 fest verbundene Gehäuse 48 der Stufe I des Getriebes 41 in Rotation versetzt. Dadurch werden die in dem Gehäuse 48 angeordneten Zahnräder 44 und 47 der Zahnradsätze 42 und 45 ebenfalls angetrieben. Das Zahnrad 44 wälzt sich dabei in dem an dem Ansatz 30' drehfest abgestützten Zahnrad 43 ab, so dass das mit dem Zahnrad 47 kämmende Zahnrad 46 und mit diesem die Hohlwelle 51, umlaufen.

Von der Hohlwelle 51 wird das mit dem Zahnrad 56 des Radsatzes 55 in Eingriff befindliche Zahnrad 57 der Stufe II verdreht, und durch dieses wird das Zahnrad 54, das mit dem Zahnrad 57 fest verbunden ist, mitgenommen. Das mit dem Zahnrad 54 kämmende Zahnrad 53 wird somit angetrieben, so dass die Antriebsenergie über die Hohlwelle 76, dem Zahnrad 77 sowie dem Umlaufrädergetriebe 71 dem Bewegungswandler 21 zugeführt wird. Durch diesen werden die zugeleiteten rotatorischen Bewegungen in translatorische Verstell-Bewegungen umgewandelt, die Spannbacken 4 des Kraftspann-Futters 3 werden somit, je nach Drehrichtung, nach innen oder außen verstellt und das Werkstück 10 kann gespannt oder gelöst werden.

Da die Stufen I und II des Getriebes 41 reziprok zueinander ausgelegt sind, entspricht die Ausgangsdrehzahl des Zahnrades 53 der Eingangsdrehzahl des Zahnrades 46, mit Hilfe der Zahnräder 77, 72, 73 und 78 kann jedoch die Glocke 22 des Bewegungswandlers 21 bei einem Spannvorgang mit einer untersetzten Drehzahl angetrieben werden, die auf die Auslegung der Bauteile und den Einsatzbereich der Spanneinrichtung 1 abgestimmt ist.

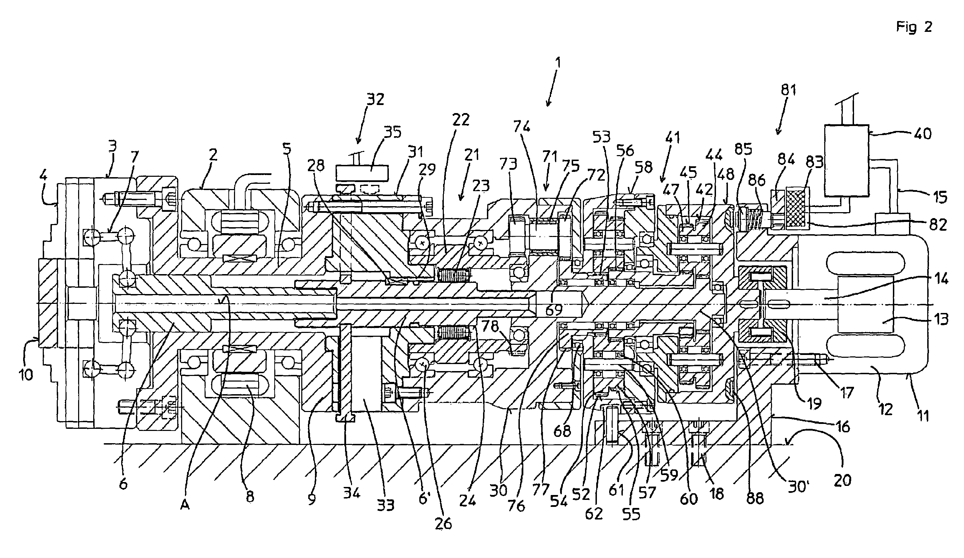

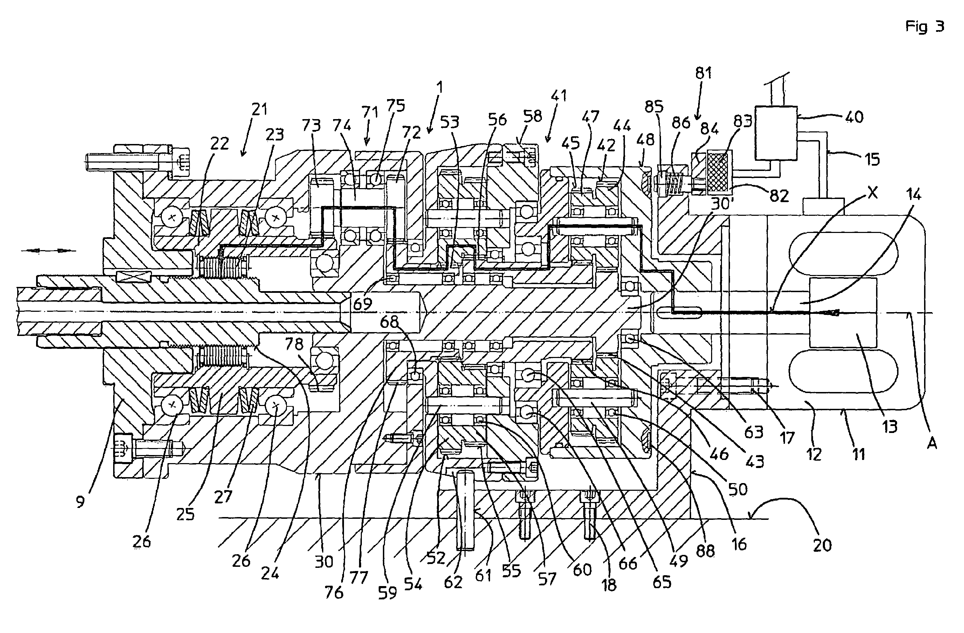

In Fig. 3, die Fig. 2 entspricht, ist durch eine Pfeillinie X gekennzeichnet, welche Bauteile der Spanneinrichtung 1 bei einem Spannvorgang an der Kraftübertragung beteiligt sind.

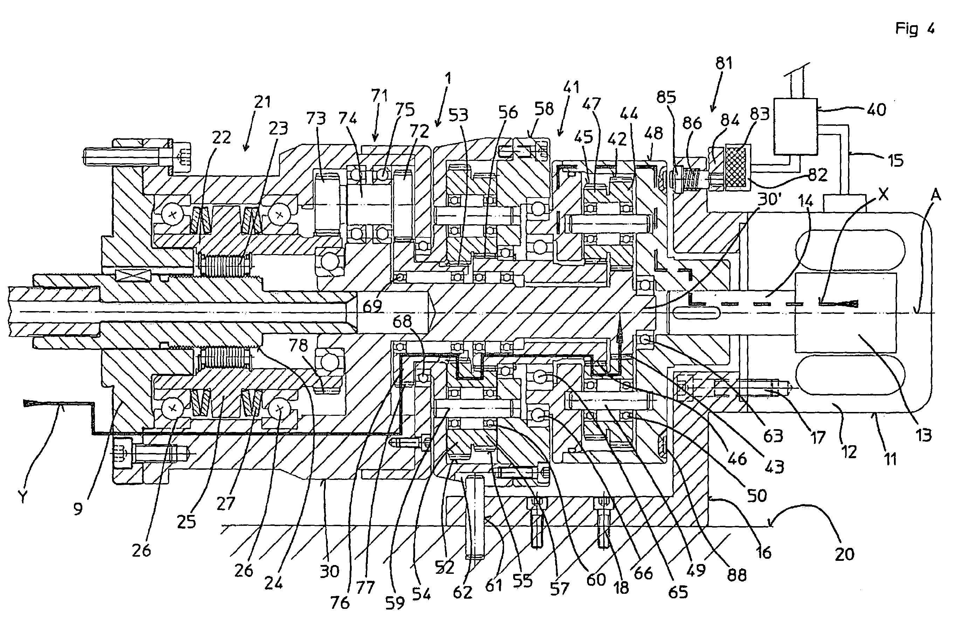

In Fig. 4 ist in gleicher Weise durch eine Pfeillinie Y gekennzeichnet, wie durch das Getriebe 41 bewerkstelligt wird, dass bei Arbeitsvorgängen die Antriebsdrehzahl der Maschinenspindel 5 nicht auf den Servomotor 41 einwirkt. Durch die Maschinenspindel 5 werden in diesen Betriebszuständen über das Umlaufrädergetriebe 71 die Stufen I und II des Getriebes 41 in entgegengesetzter Richtung in Rotation versetzt. Da jedoch die Übersetzung der Stufen I und II reziprok zueinander sind und somit einen Kehrwert aufweisen, wird die Drehzahl der Maschinenspindel 5 in der Stufe I des Getriebes 41 unwirksam und somit gewissermaßen eliminiert, das Gehäuse 48 der Stufe II ist dadurch nicht angetrieben, so dass auf die Rotorwelle 14 des Servomotors 11 und somit auch auf dessen Rotor 13 keine Drehbewegung einwirkt.

Bei Arbeitsvorgängen ist nicht nur der ortsfest abgestützte Stator 12 des Servomotors 11 stillgesetzt, sondern auch dessen Rotor 13. Zur Aufrechterhaltung der Spannkraft der Spannbacken 4 auf das Werkstück 10 ist lediglich ein, den jeweiligen Vorgaben angepasstes, Stillstands-Drehmoment aufrecht zu erhalten. Der Energieverbrauch bei Arbeitsvorgängen ist demnach äußerst gering.

Die Spanneinrichtung 1 nach Fig. 2 ist des Weiteren mit einer Wegmesseinrichtung 32 sowie einer Sicherheitseinrichtung 81 ausgestattet.

Die Wegmesseinrichtung 32 ist hierbei in einem mit dem Flansch 9 fest verbundenen Zwischenstück 31 angeordnet und besteht aus einem an der Zugstange 6, 6' befestigten Kontaktring 34, der einen in das Zwischenstück 31 eingearbeitete schlitzartige Ausnehmung 33 durchgreift, und einem die von dem Kontaktring 34 berührungslos aufgenommenen Signale verwertenden Empfänger 35, die der Maschinensteuerung zugeführt werden. Anhand der von dieser ausgewerteten Signale kann die jeweilige Lage der Spannbacken 4 des Kraftspannfutters 3 ermittelt werden.

Die bei der Spanneinrichtung 1 nach Fig. 2 verwendete Sicherheitseinrichtung 81 weist eine in einem gesonderten Gehäuse 82 eingesetzte Magnetspule 83, einen durch diese beeinflussbaren Anker 84 sowie einen Sicherungsbolzen 85 auf, der entgegen der Kraft einer Feder 86 verstellbar ist und in in das Gehäuse 48 eingearbeitete Ausnehmungen 88 eingreifen kann. Z. B. bei einem Stromausfall rastet der Sicherungsbolzen 85 entgegen der Kraft der Feder 86 selbsttätig in eine der in das Gehäuse 48 eingearbeiteten Ausnehmungen 88 ein, so dass die Spanneinrichtung 1 blockiert ist und die Spannkraft des Kraftspannfutters 3 aufrechterhalten bleibt. Die Sicherungseinrichtung 81 kann aber auch während eines Arbeitsvorganges der Spanneinrichtung 1 aktiviert werden, so dass dadurch, da das Gehäuse 48 durch diese blockiert ist, die Spannkraft in dem Kraftspannfutter 4 aufrechterhalten bleibt und der Servomotor 11 gänzlich abgeschaltet werden kann.

Gemäß Fig. 6 ist die Sicherheitseinrichtung 81' durch einen in einem Gehäuse 83' eingesetzten Verstellkolben 87' und einer Reibkupplung 89', gebildet. Der Verstellkolben 87', dem über eine Steuereinrichtung 90', entgegen der Kraft einer Rückstellfeder 86' gesteuert Druckmittel zuführbar ist, ist hierbei auf einem bildenden Reibbelag 89" versehen, der gegebenenfalls gegen einen an dem Gehäuse 48 der Stufe I des Getriebes 41 angebrachten Reibbelag 89"' anpressbar ist. Mittels der Reibkupplung 89' ist somit die Drehzahl des Gehäuses 48 beeinflussbar und dieses kann stillgesetzt werden.

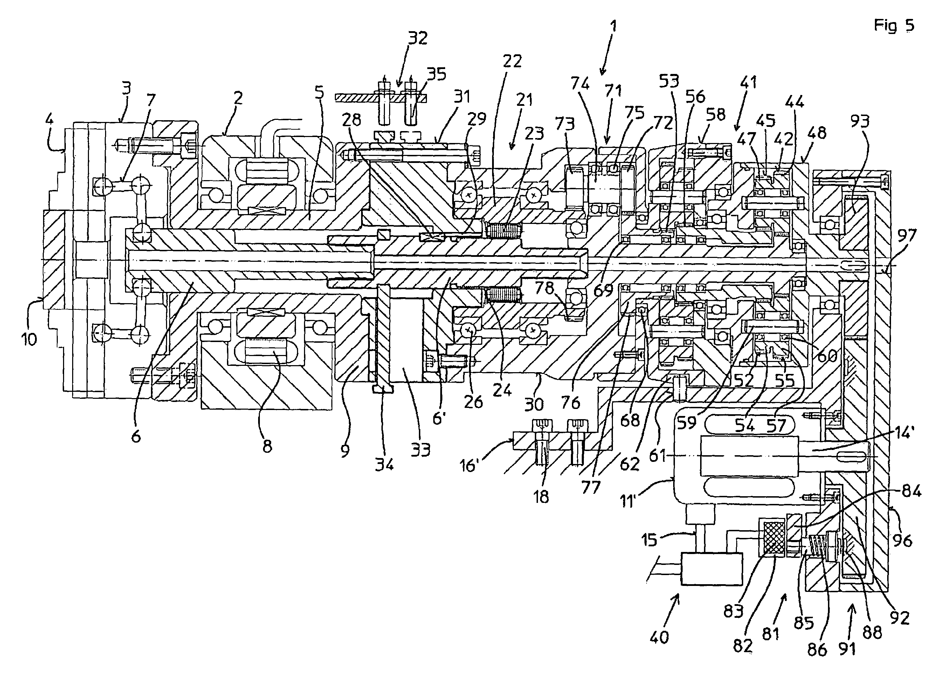

Bei der Spanneinrichtung 1 nach den Fig. 1 bis 4 ist der Servomotor 11 koaxial zur Längsachse A der Spanneinrichtung 1 angeordnet, nach den Fig. 5 und 6 kann der Servomotor 11' bzw. 11" aber auch achsparallel zur Längsachse A oder winkelig zu dieser an den Lagerbock 16' bzw. 16 angeordnet werden.

Gemäß Fig. 5 sind dazu als Zahnräder 92 und 93 ausgebildete Getriebeglieder 91 vorgesehen, die von einem Gehäuse 96 abgedeckt sind. Die Rotorwelle 14' des Servomotors 11' ist hierbei mit dem Gehäuse 48 des Getriebes 41 verbunden und der Stator 12' des Servomotors 11' ist mittels des Lagerbockes 16' wiederum ortsfest abgestützt. Das Gehäuse 96 ist mit einer konzentrisch zur Längsachse A der Spanneinrichtung 1 angeordneten Bohrung 97 versehen, die mit in der Zugstange 6, 6' und dem Maschinengehäuse 30 bzw. dem Ansatz 30' eingearbeitete Bohrungen fluchtet. Dem Kraftspannfutter 3 kann somit z.B. ein Schmiermittel oder ein stangenförmiges Werkstück durch das Gehäuse 96 zugeführt werden.

Bei den Ausführungsvarianten nach Fig. 6 ist der Servomotor 11" winkelig zur Längsachse A der Spanneinrichtung 1 angeordnet und über Kegelräder 94 und 95 mit dem Gehäuse 48, die auf der Rotorwelle 14" und unmittelbar auf dem Gehäuse 48 drehfest gelagert sind, trieblich verbunden. An dem Gehäuse 96", das eine konzentrisch zur Längsachse A der Spanneinrichtung 1 angeordnete Bohrung 97" aufweist, sind die Sicherheitseinrichtung 81' sowie zusammen mit dem Lagerbock 16 der Servomotor 11" gelagert.

Die Spanneinrichtungen 1 nach den Fig. 5 und 6 sind somit auch als Hohlspanner verwendbar.

## Patentansprüche

1. Spanneinrichtung (1) für Werkzeugmaschinen (2), die mit einem Kraftspannfutter (3) zur Halterung eines Werkstückes (10) versehen und dessen Spannbacken (4) mittels der Spanneinrichtung (1) über eine axial verstellbare Zugstange (6) betätigbar sind, wobei die Spanneinrichtung (1) ein Maschinengehäuse (30), mindestens einen Teil (6') der Zugstange (6), einen umschaltbaren elektrischen Servomotor (11) sowie einen Bewegungswandler (21) aufweist, mittels dem die Verstellbewegungen der Rotorwelle (14) des Servomotors (11) in die zur Verstellung der Spannbacken (4) erforderlichen axialen Verstellbewegungen der Zugstange (6) umsetzbar sind, wobei der Stator (12) des Servomotors (11) ortsfest, vorzugsweise am Maschinenbett (20) der Werkzeugmaschine (2), abgestützt ist, wobei der Rotor (13) des Servomotors (11) über ein zweistufiges Getriebe (41), dessen beide Stufen (I, II) unmittelbar miteinander gekoppelt sind, und den z.B. als Gewinderollspindel ausgebildete Bewegungswandler (21) mit dem Teil (6') der Zugstange (6) trieblich verbunden ist, und wobei die Maschinenspindel (5) der Werkzeugmaschine (2) mit den beiden Stufen (I, II) des Getriebes (41) in Triebverbindung stehen kann,
**dadurch gekennzeichnet,**
**dass** das Maschinengehäuse (30) mit der Maschinenspindel (5) verbindbar ist, dass das Maschinengehäuse (30) mit den beiden Stufen (I, II) des Getriebes (41) in Triebverbindung steht, dass die Übersetzungen der beiden Stufen (I, II) des Getriebes (41) reziprok zueinander ausgelegt und jeweils durch einen Zahnradsatz (42, 52) mit gleichen Zähnezahlen und einem Zahnradsatz (45, 55) mit unterschiedlichen und reziprok zu dem anderen Zahnradsatz (55 bzw. 45) bemessenen Zahnrädern (46, 47 bzw. 55, 56) gebildet sind, derart, dass die Drehbewegungen des mit der Maschinenspindel (5) verbindbaren Maschinengehäuses (30) in der an den Servomotor (11) angeschlossenen ersten Stufe (I) des Getriebes (41) unwirksam sind.

2. Spanneinrichtung nach Anspruch 1,
**dadurch gekennzeichnet,**
**dass** die mit den zentrisch angeordneten Zahnrädern (43, 46 bzw. 55, 56) kämmenden Zahnräder 44, 47 bzw. 54, 57) jeweils in Gehäusen (48 bzw. 58) drehbar gelagert sind, von denen die dem Servomotor (11) unmittelbar benachbarte erste Stufe (I) in einem mit dessen Rotorwelle (14) verbundenen antreibbaren umlaufenden Gehäuse (48) und die zweite Stufe (II) des Getriebes (41) in einem ortsfesten, vorzugsweise am Maschinenbett (20) abgestützten Gehäuse (58) drehbar gelagert sind.

3. Spanneinrichtung nach Anspruch 2,
**dadurch gekennzeichnet,**
**dass** die reziprok zueinander ausgelegten Zahnradsätze (45, 55) der beiden Stufen (I, II) des Getriebes (41) unmittelbar nebeneinander und deren Radsätze (42, 52) mit gleichen Zähnezahlen jeweils auf den Außenseiten der beiden Stufen (I, II) angeordnet sind, dass die der Reziprozität zugeordneten Radsätze (45, 55) der beiden Stufen (I, II) über eine Hohlwelle (51), an der die Zahnräder (46, 56) mit gleichen Zähnezahlen angearbeitet bzw. angebracht sind, trieblich miteinander verbunden sind, und dass zur Nutzung der Reziprozität wechselweise das eine der Zahnräder (46, bzw. 56) der Hohlwelle (51) als Antriebsglied und das andere Zahnrad (56, 46) als Abtriebsrad wirksam sind.

4. Spanneinrichtung nach einem der Ansprüche 2 oder 3,
**dadurch gekennzeichnet,**
**dass** die Gehäuse (48, 58) der ersten und zweiten Stufe (I, II) des Getriebes (41) auf einem zentrischen wellenförmigen Ansatz (30') des mit der Maschinenspindel (5) der Werkzeugmaschine drehfest verbindbaren Maschinengehäuse (30) drehbar abgestützt sind.

5. Spanneinrichtung nach einem oder mehreren der Ansprüche 2 bis 4,
**dadurch gekennzeichnet,**
**dass** das mit gleichen Zähnezahlen ausgelegte Zahnradpaar (42) der ersten Stufe (I) des Getriebes(41) über den wellenförmigen Ansatz (30') des Maschinengehäuses (30) mit der Maschinenspindel (5) der Werkzeugmaschine (2) trieblich fest verbunden ist.

6. Spanneinrichtung nach einem oder mehreren der Ansprüche 2 bis 5,
**dadurch gekennzeichnet,**
**dass** die Rotorwelle (14) des Servomotors (11) über eine elastische Kupplung (19) mit dem Gehäuse (48) der ersten Stufe (I) des Getriebes (41) trieblich verbunden ist.

7. Spanneinrichtung nach einem oder mehreren der Ansprüche 1 bis 6,
**dadurch gekennzeichnet,**
**dass** zwischen der zweiten Stufe (II) des Getriebes (41) und dem Bewegungswandler (21) ein vorzugsweise durch Zahnräder (72, 73) gebildetes als Untersetzungsgetriebe ausgelegtes Umlaufrädergetriebe (71) angeordnet ist, dessen umlaufende Zahnräder (72, 73) in dem mit der Maschinenspindel (5) fest verbundenen Maschinengehäuse (30) drehbar gelagert sind.

8. Spanneinrichtung nach einem oder mehreren der Ansprüche 1 bis 7,
**dadurch gekennzeichnet,**
**dass** der Bewegungswandlers (21) eine antreibbare Glocke (22) aufweist, die axial elastisch verstellbar in dem mit der Maschinenspindel (5) verbindbaren Maschinengehäuse (30) abgestützt ist.

9. Spanneinrichtung nach Anspruch 8,
**dadurch gekennzeichnet,**
**dass** die Glocke (22) des Bewegungswandlers (21) mittels Federn (27), vorzugsweise Tellerfedern, Gummipuffern oder dergleichen über Wälzlager (26) an dem Gehäuse (30) axial elastisch verstellbar abgestützt ist.

10. Spanneinrichtung nach einem oder mehreren der Ansprüche 1 bis 9,
**dadurch gekennzeichnet,**
**dass** der Zugstange (6) oder dem der Spanneinrichtung (1) zugeordnete Teil (6') der Zugstange (6) eine Wegmesseinrichtung (32) und/oder mit dieser zusammen wirkende Endschalter zugeordnet sind.

11. Spanneinrichtung nach einem oder mehreren der Ansprüche 2 bis 10,
**dadurch gekennzeichnet,**
**dass** dem Servomotor (11) der Spanneinrichtung (1) und/oder dem durch dessen Rotor (13) antreibbaren Gehäuse (48) der ersten Stufe (I) des Getriebes (41) eine Sicherheitseinrichtung (81) zugeordnet ist, mittels der der mit dem Rotor (13) zusammenwirkende Antriebsstrang blockierbar ist.

12. Spanneinrichtung nach Anspruch 11,
**dadurch gekennzeichnet,**
**dass** die Sicherheitseinrichtung (81) aus einer z.B. in einem gesonderten Gehäuse (82) eingesetzten Magnetspule (83), einem Anker (84) oder einem durch ein Druckmittel, vorzugsweise durch Druckluft, beaufschlagbaren Verstellkolben (87) und einem entgegen der Kraft einer Feder (86) axial verstellbaren an dem Anker (84) bzw. dem Verstell-Bolzen (87) angebrachten Sicherungsbolzen (85) besteht, der unmittelbar oder über Zwischenglieder in an zugeordneten Bauteilen (48) vorgesehene Ausnehmungen (88) einführbar ist.

13. Spanneinrichtung nach Anspruch 11,
**dadurch gekennzeichnet,**
**dass** die Sicherungseinrichtung (81') als Reibkupplung (89') ausgebildet ist, deren mit einem vorzugsweise an dem Gehäuse (48) der ersten Stufe (I) des Getriebes (41) angebrachten Reibbelag (89"') über einen weiteren Reibbelag (89") zusammenwirkender Verstell-Kolben (87') mittels Magnetkraft oder durch ein Druckmittel betätigbar ist.

14. Spanneinrichtung nach einem oder mehreren der Ansprüche 2 bis 13,
**dadurch gekennzeichnet,**
**dass** der Servomotor (11) koaxial zur Zugstange (6) an dem Gehäuse (48) der ersten Stufe (I) des Getriebes (41) angebracht ist.

15. Spanneinrichtung nach einem oder mehreren der Ansprüche 2 bis 13,
**dadurch gekennzeichnet,**
**dass** der Servomotor (11) achsparallel oder winkelig zur Längsachse (A) der Spanneinrichtung (1) angeordnet ist und dass dessen Rotor (13', 13") über Getriebeglieder (91 bzw. 92), vorzugsweise eine Zahnradstufe (92, 93) bzw. Kegelräder (94, 95), mit dem Gehäuse (48) der ersten Stufe (I) des Getriebes (41) trieblich verbunden ist.

## Claims

1. A clamping device (1) for machine tools (2) that is provided with a power-operated chuck (3) for holding a workpiece (10), the clamping jaws (4) of which can be actuated using the clamping device (1) by means of an axially moveable draw rod (6), in which the clamping device (1) possesses a machine housing (30), at least one part (6') of the draw rod (6), an electric servomotor (11) with a changeover function as well as a movement converter (21) for converting the adjustment movements of the rotor shaft (14) of the servomotor (11) into the axial movements of the draw rod (6) required for actuating the clamping jaws (4), in which the stator (12) of the servomotor (11) is supported in a fixed location, preferably on the machine bed (20) of the machine tool (2), with the rotor (13) of the servomotor (1) being in a driving connection with the part (6') of the draw rod (6) by means of a two-stage gear unit (41), the two stages (I, II) of which are directly connected to one another and by means of the motion converter (21) that is configured for example as a threaded roller spindle, and in which the machine spindles (5) of the machine tool can be in a driving connection with the two stages (I, II) of the gear unit (41),
**characterised in that,**
the machine housing (30) can be connected to the machine spindle (5), that the machine housing (30) is in a driving connection with the two stages (I, II) of the gear unit (41), that the ratios of the two stages (I, II) of the gear unit (14) are configured reciprocally to one another and are each configured by a gear set (42, 52) with differently sized gears (46, 47 or 55, 56) dimensioned reciprocally to the other gear set (55 or 45), in such a way that the rotational movements of the machine housing (30) that can be connected to the machine spindle (5) have no effect in the first stage (I) of the gear unit (14) connected to the servomotor (11).

2. The clamping device in accordance with Claim 1,
**characterised in that**
each of the gears (44, 47 or 54, 57) meshing with the centrally arranged gears (43, 46 or 55, 56) are mounted in a rotating arrangement in housings (48 or 58), of which the first stage (I) immediately adjacent to the servomotor (11) is mounted in a rotating arrangement in a driven, circulating housing (48) connected to the rotor shaft (14) of the servomotor (11) and the second stage (II) of the gear unit (41) is mounted in a rotating arrangement in a housing (58) in a fixed location that is preferably supported on the machine bed (20).

3. The clamping device in accordance with Claim 2,
**characterised in that**
the gear sets (44, 55) of the two stages (I, II) of the gear unit (14) that are configured reciprocally to one another are arrange immediately adjacent to one another and their gear sets (42, 52) with the same number of teeth are each arranged on the outsides of the two stages (I, II), that the gear sets (44, 55) of the two stages (I, II) allocated to the reciprocal arrangement are connected to one another in a driven arrangement by means of a hollow shaft (51) on which the gears (46, 56) with the same number of teeth are worked or attached, and that in order to use the reciprocal arrangement one of the gears (46 or 56) of the hollow shaft (51) alternates as the drive element with the other gear (56, 46).

4. The clamping device in accordance with one of Claims 2 or 3,
**characterised in that**
the housings (48, 58) of the first and second stage (I, II) of the gear unit (41) are supported in a rotating arrangement on a central, shaft-shaped shoulder (30') of the machine housing (30) that can be connected in a rotationally fixed arrangement to the machine spindle (5) of the machine tool.

5. The clamping device in accordance one or more of Claims 2 to 4,
**characterised in that**
the gear pair (42) of the first stage (I) of the gear unit (41) which has the same number of teeth is in a fixed driven connection with the machine spindle (5) of the machine tool (2) by means of the shaft-shaped shoulder (30') of the machine housing (30).

6. The clamping device in accordance one or more of Claims 2 to 5,
**characterised in that**
the rotor shaft (14) of the servomotor (11) is in a driven connection with the housing (48) of the first stage (I) of the gear unit (41) by means of an elastic coupling (19).

7. The clamping device in accordance with one or more of Claims 1 to 6,
**characterised in that**
a planetary gear unit (71) preferably configured by gears (72, 73) as a step-down gear unit is arranged between the second stage (II) of the gear unit (41), with its planet gears (72, 73) mounted in a rotating arrangement in the machine housing (30) that is firmly connected to the machine spindle (5).

8. The clamping device in accordance with one or more of Claims 1 to 7,
**characterised in that**
the motion converter (21) has a drivable bell (22) which is supported in an axially elastically adjustable arrangement in the machine housing (30) that can be connected to the machine spindle (5).

9. The clamping device in accordance with Claim 8,
**characterised in that**
the bell (22) of the motion converter (14) is supported in an axially elastically adjustable arrangement on the housing (30) by means of cup springs, rubber buffers or the like via anti-friction bearings (26).

10. The clamping device in accordance with one or more of Claims 1 to 9,
**characterised in that**
the draw rod (6) or the part (6') of the draw rod (6) allocated to the clamping device (1) is allocated to a travel measuring device (32) and/or a limit switch acting together with it.

11. The clamping device in accordance with one of Claims 2 to 10,
**characterised in that**
a safety device (81) is allocated to the servomotor (11) of the clamping device (1) and/or to the housing (48) of the first stage (I) of the gear unit (14) that can be driven by the rotor (13) of the servomotor (13), by means of which safety device (81) the driveline interacting with the rotor (13) can be blocked.

12. The clamping device in accordance with Claim 11,
**characterised in that**
the safety device (81) consists of a magnetic coil (83) inserted in, for example, a especial housing (82), an armature (84) or an adjustment piston (87) that can be actuated by a pressurised medium, preferably compressed air, and a securing pin (85) that is axially adjustable against the force of a spring (86) and attached to the armature (84) or to the adjustment pin (87), in which case the securing pin (85) can be inserted directly or using intermediate elements into openings (88) provided on allocated components (48).

13. The clamping device in accordance with Claim 11,
**characterised in that**
the securing device (81') is configured as a friction clutch (89'), the friction lining (89"") of which is preferably attached to the housing (48) of the first stage (I) of the gear unit (41), and can be actuated by means of magnetic force or by a pressurised fluid via an adjustment piston (87') interacting with another friction lining (89").

14. The clamping device in accordance with one or more of Claims 2 to 13,
**characterised in that**
the servomotor (11) is coaxially attached to the draw rod (6) on the housing (48) of the first stage (I) of the gear unit (41).

15. The clamping device in accordance with one or more of Claims 2 to 13,
**characterised in that**
the servomotor (11) is arranged axially in parallel or at an angle to the longitudinal axis (A) of the clamping device (1) and that the rotor (13', 13") of the servomotor (11) is in a driven connection with the housing (48) of the first stage (I) of the gear unit (41) by means of gear unit elements (91 or 92), preferably a gear stage (92, 93) or bevel gears (94, 95).

## Revendications

1. Dispositif de serrage (1) pour machines-outils (2), équipé d'un mandrin de serrage motorisé (3) pour le serrage d'une pièce à usiner (10), dont les mors de serrage (4) se laissent actionner à l'aide du dispositif de serrage (1) par l'intermédiaire d'une tige de traction axialement réglable (6), le dispositif de serrage (1) comprenant un boîtier (30), au moins une partie (6') de la tige de traction (6), un servomoteur électrique commutable (11) ainsi qu'un convertisseur de mouvement (21) pour la conversion des mouvements de réglage de l'arbre de rotor (14) du servomoteur (11) en mouvements de réglage axiaux de la tige de traction (6) nécessaires à l'actionnement des mors de serrage (4), le stator (12) du servomoteur (11) étant stationnaire et appuyé de préférence sur le lit de machine (20) de la machine-outil (2), où, moyennant un engrenage à deux étages (41) dont les deux étages (I, II) sont accouplés directement ensemble, et le convertisseur de mouvement (21) conçu sous la forme d'une broche filetée, le rotor (13) du servomoteur (11) est lié par entraînement avec la partie (6') de la tige de traction (6), et où la broche (5) de la machine-outil (2) peut se trouver en raccord entraînée avec les deux étages (I, II) de l'engrenage (41),
**caractérisé en ce que**
le boîtier de machine (30) se laisse raccorder à la broche (5), que le boîtier de machine (30) se trouve en raccord entraînée avec les deux étages (I, II) de l'engrenage (41) que les transmissions des deux étages (I, II) de l'engrenage (41) sont inversées l'une par rapport à l'autre et réalisées respectivement par un jeu de pignons (42, 52) à nombre de dents identique et un jeu de pignons (45, 55) avec des pignons (46, 47 ou 55, 56) conçus différentes et de manière inverse par rapport à l'autre jeu de pignons (55 ou 45), de sorte que les mouvements de rotation du boîtier de machine (3) raccordé à la broche (5) n'ont aucun effet sur l'étage (I) de l'engrenage (41) raccordé au servomoteur (11).

2. Dispositif de serrage d'après la revendication 1,
**caractérisé en ce que**
les pignons (44, 47 ou 54, 57) s'engrenant dans les pignons centrés (43, 46 ou 55, 56) sont logés respectivement en rotation dans des boîtiers (48 ou 58), dont le premier étage (I) avoisinant directement le servomoteur (11) est logé en rotation dans un boîtier rotatif (48) entraîné et lié avec son arbre de rotor (14), et le deuxième étage (II) de l'engrenage (41) dans un boîtier stationnaire (58) appuyé de préférence sur le lit de machine (2).

3. Dispositif de serrage d'après la revendication 2,
**caractérisé en ce que**
les jeux de pignon (45, 55) inversés l'un par rapport à l'autre des deux étages (I, II) de l'engrenage (41) sont arrangés directement côte à côte et leurs jeux de pignon (42, 52) à nombre de dents identique respectivement sur les faces extérieures des deux étages (I, II), que les jeux de pignon (45, 55) inversés des deux étages (I, II) sont liés ensemble par entraînement à l'aide d'un arbre creux (51) sur lequel sont formés ou fixés les pignons (46, 56) à nombre de dents identique, et que pour l'utilisation de la réciprocité, alternativement un des pignons (46 ou 56) de l'arbre creux (51) agit en tant qu'élément entraîné et l'autre pignon (56, 46) en tant que roue d'entraînement.

4. Dispositif de serrage d'après une des revendications 2 ou 3,
**caractérisé en ce que**
les boîtiers (48, 58) du premier et du deuxième étage (I, II) de l'engrenage (41) s'appuient en rotation sur un embout centré ondulé (30') du boîtier de machine (30) raccordé de manière résistant à la torsion avec la broche (5) de la machine-outil (2).

5. Dispositif de serrage d'après une ou plusieurs des revendications 2 à 4,
**caractérisé en ce que**
par l'intermédiaire de l'embout ondulé (30') du boîtier de machine (30), la paire de pignons (42) à nombre de dents identique du premier étage (I) de l'engrenage (41) est liée par entraînement rigide avec la broche (5) de la machine-outil (2).

6. Dispositif de serrage d'après une ou plusieurs des revendications 2 à 5,
**caractérisé en ce que**
par l'intermédiaire d'un accouplement élastique (19), l'arbre du rotor (14) du servomoteur (11) est lié par entraînement avec le boîtier (48) du premier étage (I) de l'engrenage (41).

7. Dispositif de serrage d'après une ou plusieurs des revendications 1 à 6,
**caractérisé en ce que**,
entre le deuxième étage (II) de l'engrenage (41) et le convertisseur de mouvement (21), il est disposé un engrenage épicycloïdal (71) formé de préférence par des pignons (72, 73) et agissant en tant qu'engrenage démultiplicateur, dont les pignons tournants (72, 73) sont logés en rotation dans le boîtier de machine (30) rigidement lié avec la broche de machine (5).

8. Dispositif de serrage d'après une ou plusieurs des revendications 1 à 7,
**caractérisé en ce que**
le convertisseur de mouvement (21) possède une cloche entraînée (22) s'appuyant axialement réglable de manière élastique dans le boîtier de machine (30) raccordable à la broche de machine (5).

9. Dispositif de serrage d'après la revendication 8,
**caractérisé en ce que**
moyennant des ressorts (27), de préférence des ressorts à disques, des tampons en caoutchouc ou des éléments similaires, la cloche (22) du convertisseur de mouvement (21) s'appuie par l'intermédiaire de roulements (26) de manière axialement réglable sur le boîtier (30).

10. Dispositif de serrage d'après une ou plusieurs des revendications 1 à 9,
**caractérisé en ce que**,
à la tige de traction (6) ou à la partie (6') de la tige de traction (6) assignée au dispositif de serrage (1), il est assigné un dispositif de mesure de course (32) et/ou des contacteurs de fin de course collaborant avec celui-ci.

11. Dispositif de serrage d'après une ou plusieurs des revendications 2 à 10,
**caractérisé en ce que**,
au servomoteur (11) du dispositif de serrage (1) et/ou au boîtier (48) du premier étage (I) de l'engrenage (41) entraîné par son rotor (13), il est assigné un équipement de sécurité (81) permettant de bloquer la chaîne cinématique collaborant avec le rotor (13).

12. Dispositif de serrage d'après la revendication 11,
**caractérisé en ce que**
l'équipement de sécurité (81) consiste d'une bobine d'excitation (83) logée p. ex. dans un boîtier séparé (82), d'un induit (84) ou d'un piston de réglage (87) actionné par un milieu de pression, de préférence de l'air comprimé, et d'un boulon de sécurité (85) axialement réglable contre la force d'un ressort (86) et prévu sur l'induit (84) ou sur le boulon de réglage (87), et se laissant introduire soit directement soit moyennant des éléments intermédiaires, dans des évidements (88) prévus dans des composants assignés (48).

13. Dispositif de serrage d'après la revendication 11,
**caractérisé en ce que**
l'équipement de sécurité (81') est conçu sous la forme d'un accouplement à friction (89') dont le piston de réglage (87') collaborant par l'intermédiaire d'une autre couche de friction (89") avec la couche de friction (89"') prévue de préférence sur le boîtier (48) du premier étage (I) de l'engrenage (41), se laisse actionner par la force magnétique ou par un autre milieu de pression.

14. Dispositif de serrage d'après une ou plusieurs des revendications 2 à 13,
**caractérisé en ce que**
le servomoteur (11) est monté en position coaxiale par rapport à la tige de traction (6) sur le boîtier (48) du premier étage (I) de l'engrenage (41).

15. Dispositif de serrage d'après une ou plusieurs des revendications 2 à 13,
**caractérisé en ce que**
le servomoteur (11) est monté parallèle à l'axe ou en position angulaire par rapport à l'axe longitudinal (A) du dispositif de serrage (1) et que moyennant des éléments d'engrenage (91 ou 92), de préférence un étage de pignons (92, 93) ou des roues coniques (94, 95), son rotor (13', 13") est lié par entraînement avec le boîtier (48) du premier étage (I) de l'engrenage (41).
